# EUROPÄISCHE PATENTSCHRIFT

(11) **EP 2 176 642 B1**
(45) Veröffentlichungstag und Bekanntmachung des Hinweises auf die Patenterteilung: **01.08.2018**
(21) Anmeldenummer: 08801590.4
(22) Anmeldetag: 14.08.2008
(51) Int. Cl.: G07D 7/12, G01N 21/27

(54) **VERFAHREN FÜR DIE KALIBRIERUNG EINES SENSORSYSTEMS**
METHOD FOR CALIBRATING A SENSOR SYSTEM
PROCÉDÉ D'ÉTALONNAGE D'UN SYSTÈME DÉTECTEUR

(30) Priorität: 16.08.2007 DE 102007038752
(43) Veröffentlichungstag der Anmeldung: 21.04.2010
(73) Patentinhaber: Giesecke+Devrient Currency Technology GmbH, 81677 München (DE)
(72) Erfinder: ENGELHARDT, Franz, 82319 Starnberg (DE); HOLL, Norbert, 82110 Germering (DE); NÖMMER, Franz, 84405 Dorfen (DE)
(86) Internationale Anmeldenummer: PCT/EP2008/006713
(87) Internationale Veröffentlichungsnummer: WO 2009/021746

(56) Entgegenhaltungen:
- EP-A1- 0 878 704
- DE-A1-102004 021 448
- US-A1- 2001 008 275
- US-A1- 2005 078 314

## Beschreibung

Die Erfindung betrifft ein Verfahren für die Kalibrierung eines Sensorsystems.

Um eine korrekte Funktion von Sensoren sicherzustellen werden Sensoren üblicherweise kalibriert. Für die Kalibrierung von Sensoren werden Kalibriermedien verwendet, die bestimmte, fest vorgegebene Eigenschaften aufweisen. Mittels dieser bekannten Eigenschaften ist es möglich, die Sensoren zu kalibrieren, da die bekannten Eigenschaften der Kalibriermedien bestimmte, zu erwartende Meßsignale der Sensoren hervorrufen müssen. Damit ist es möglich Abweichungen der Sensoren, die z. B. herstellungs-, alterungs-, verschmutzungsbedingt usw. hervorgerufen werden, zu erkennen und bei Messungen zu berücksichtigen. Dazu wird in einem Kalibriermodus festgestellt, ob die Meßsignale der Sensoren von den aufgrund des verwendeten Kalibriermediums zu erwartenden Meßsignalen abweichen. Die Größe der ermittelten Abweichungen legt die für eine Korrektur der Abweichungen erforderlichen Einstellungen des Sensors fest. Dazu können beispielsweise Korrekturfaktoren bestimmt werden, mit denen die Meßsignale der Sensoren bei anschließenden Messungen im Betriebsmodus beaufschlagt werden, um die Abweichungen auszugleichen. Ebenso kann die Intensität einer Anregungsquelle, beispielsweise einer Beleuchtung, bei der Korrektur verändert werden, bis die Meßsignale des Sensors die zu erwartenden Werte aufweisen. Die veränderte Intensität der Anregungsquelle wird beibehalten und anschließend für Messungen mit dem Sensor verwendet, wodurch die aufgetretenen Abweichungen ausgeglichen werden.

Besondere Schwierigkeiten treten auf, wenn an die Kalibrierung von Sensoren hohe Ansprüche gestellt werden, weil mittels der Sensoren sensible Messungen vorgenommen werden, z. B. die Erkennung von Wertdokumenten, nachfolgende als Banknoten bezeichnet, deren Art (Währung, Denomination), Echtheit, Zustand (Verschmutzung, Beschädigung) usw. festgestellt werden soll. In derartigen Fällen ist eine sehr präzise Kalibrierung der Sensoren erforderlich, da Fehlbeurteilungen aufgrund falscher Meßsignale der Sensoren unbedingt vermieden werden müssen. In diesem Zusammenhang hat sich die Verwendung von hochwertigen Kalibiermedien mit standardisierten Referenzen, sogenannten Meßnormalen, aus verschiedenen Gründen als problematisch herausgestellt.

Aus der WO 2006/025846 A1 ist eine selbstkalibrierendes optisches System bekannt, das ein hochwertiges Kalibriermedium mit einer standardisierten Weißreferenz verwendet, welches in einem Sensorgehäuse des optischen Systems integriert ist. Das Kalibriermedium mit der standardisierten Weißreferenz wird während des Kalibriermodus mittels einer Mechanik innerhalb des Sensorgehäuses in den Strahlengang des Sensors eingeklappt. Aufgrund der definierten optischen Eigenschaften der standardisierten Weißreferenz ist jederzeit eine Selbstkalibrierung des Sensors möglich. Im Betriebsmodus wird das Kalibriermedium mittels der Mechanik aus dem Strahlengang des Sensors geklappt, um Messungen z. B. pharmazeutischer Produkte zu ermöglichen.

Das aus WO 2006/025846 A1 bekannte selbstkalibrierende optische System weist jedoch den Nachteil auf, daß ein hochwertiges Kalibriermedium mit einer standardisierten Weißreferenz verwendet werden muß, um die gewünschte jederzeitige Selbstkalibrierung zu ermöglichen. Die Verwendung der standardisierten Weißreferenz weist zum einen den Nachteil auf, daß eine derartige standardisierte Weißreferenz in jedem zu kalibrierenden optischen System eingesetzt werden muß, derartige standardisierte Referenzen für die Kalibrierung aber teuer sind. Dies resultiert aus der Notwendigkeit die standardisierten Referenzen exakt zu vermessen, da für die Selbstkalibrierung sichergestellt sein muß, daß die die Referenzen exakt die gewünschten Eigenschaften aufweisen. Zum anderen kann es, trotz der relativ geschützten Unterbringung der standardisierten Referenz zu z. B. alterungsbedingten Veränderungen der standardisierten Referenz kommen. In diesem Fall ist keine zuverlässige Selbstkalibrierung des Sensors mehr möglich.

Weiterhin ist durch die Unterbringung des Kalibriermediums mit der standardisierten Weißreferenz innerhalb des Sensorgehäuses und des Einklappens in den Strahlengang des zu kalibrierenden Sensors innerhalb des Sensorgehäuses immer eine Abweichung vom eigentlichen Meßort des Sensors gegeben, der außerhalb des Sensorgehäuses liegt. Diese Problematik wird noch vergrößert, wenn die Sensoren bzw. eine zugehörige Beleuchtung größere zeilen- oder flächenförmige Gebiete erfassen sollen, weshalb sie beispielsweise als Zeilenkamera aufgebaut sind. Derartige Sensoren weisen eine Vielzahl von Elementen auf, die nebeneinander angeordnet sind, um z. B. den zeilenförmigen Sensor bzw. seine Beleuchtung mit einer erforderlichen Länge zu bilden. In der Regel weisen derartige Sensoren bzw. Beleuchtungen zudem optisch abbildende Systeme auf. In derartigen Fällen ist es zum einen wünschenswert eine Kalibrierung für alle den Sensor bildenden Elemente durchführen zu können, zum anderen tritt bei der bekannten Kalibrierung eine Unschärfe auf, da das Kalibriermedium nicht im Fokusbereich des Sensors liegt, innerhalb dessen im Betriebsmodus die Messung von Meßobjekten, z. B. Banknoten, erfolgt.

Aus der DE 10 2004 021 448 A1 ist ein Verfahren zur Rekalibrierung bekannt, bei dem neben externen Kalibriermedien auch innerhalb eines Sensors angeordnete Kalibriermedien verwendet werden. Jedoch handelt es sich bei allen verwendeten Kalibriermedien um standardisierte Referenzen.

Ausgehend von diesem Stand der Technik liegt der Erfindung die Aufgabe zugrunde, ein Verfahren für die Kalibrierung eines Sensorsystems anzugeben, welches bei verringertem Aufwand eine präzise und langzeitstabile Kalibrierung ermöglicht.

Die Lösung dieser Aufgabe ergibt sich aus den Merkmalen des Anspruchs 1. Weiterbildungen sind Gegenstand der Unteransprüche.

Die Erfindung geht von einem Verfahren für die Kalibrierung eines Sensorsystems in einem Sensorgehäuse (1), mit einem Betriebsmodus für die Prüfung von Meßobjekten, insbesondre Banknoten, und einem Kalibriermodus, für die Kalibrierung des Sensorsystems, aus, bei dem in einem ersten Kalibrierungsschritt ein von dem Sensorsystem unabhängiges erstes Kalibriermedium, mit einer standardisierten Referenz, in einen außerhalb des Sensorgehäuses liegenden Fokusbereich des Sensorsystems eingebracht wird und den gesamten Erfassungsbereich des Sensorsystems abdeckt, an dem sich während des Betriebsmodus das jeweils zu prüfende Meßobjekt befindet, wobei eine Anregungsquelle des Sensorsystemsystems das erste Kalibriermedium mit einem Anregungssignal anregt und ein aufgrund des Anregungssignals von der standardisierten Referenz des ersten Kalibriermediums erzeugtes Signal von mindestens einem Sensor des Sensorsystems detektiert und ein Meßsignal erzeugt wird, und wobei aufgrund des Meßsignals eine Einstellung des Sensorsystems vorgenommen wird, und in einem zweiten Kalibrierungsschritt, der unmittelbar nach dem ersten Kalibrierungsschritt durchgeführt wird, ein zweites Kalibriermedium mit einer nicht standardisierten Referenz, das Bestandteil des Sensorsystems ist, an einen Ort in den Strahlengang des Sensorsystems eingebracht wird, der um eine Distanz zum Fokusbereich des Sensorsystems in das Sensorgehäuse hinein versetzt ist, und den gesamten Erfassungsbereich des Sensorsystems abdeckt, wobei die Anregungsquelle des Sensorsystems das zweite Kalibriermedium mit dem Anregungssignal anregt und ein aufgrund des Anregungssignals von der Referenz des zweiten Kalibriermediums erzeugtes Signal vom Sensor detektiert und ein Meßsignal erzeugt wird, und wobei das Meßsignal des zweiten Kalibrierungsschritts gespeichert wird, und bei dem weiterhin im Kalibriermodus das zweite Kalibriermedium erneut an den Ort in den Strahlengang des Sensorsystems eingebracht wird, der um die Distanz zum Fokusbereich des Sensorsystems in das Sensorgehäuse hinein versetzt ist, und den gesamten Erfassungsbereich des Sensorsystems abdeckt, wobei die Anregungsquelle des Sensorsystems das zweite Kalibriermedium mit dem Anregungssignal anregt und ein aufgrund des Anregungssignals von der Referenz des zweiten Kalibriermediums erzeugtes Signal vom Sensor detektiert und ein Meßsignal erzeugt wird, und wobei das Meßsignal des Kalibriermodus mit dem gespeicherten Meßsignal des zweiten Kalibrierungsschritts verglichen wird, und eine Einstellung des Sensorsystems vorgenommen wird, falls das Meßsignal des Kalibriermodus von dem gespeicherten Meßsignal des zweiten Kalibrierungsschritts abweicht.

Der Vorteil der erfindungsgemäßen Verfahrens besteht darin, nur ein hochwertiges Kalibriermedium mit einer standardisierten Referenz verwendet werden muß, um die gewünschte Kalibrierung zu ermöglichen. Dieses hochwertige Kalibriermedium muß nur einmalig eingesetzt werden, z. B. bei der Herstellung oder Reparatur des zu kalibrierenden Sensorsystems. Da dieses hochwertige Kalibriermedium für alle Sensorsysteme verwendet werden kann, wird zudem erreicht, daß alle Sensorsysteme eines Typs gleichartig kalibriert sind und somit vergleichbare Meßsignale für ein bestimmtes Meßobjekt liefern.

Für die Kalibrierung des Sensorsystems im normalen Betrieb kann ein kostengünstiges Kalibriermedium mit einer nicht standardisierten Referenz verwendet werden. Dies hat zudem den weiten Vorteil, daß das hochwertige Kalibriermedium mit der standardisierten Referenz keinerlei schädlichen Umwelteinflüssen während des Betriebs des Sensorsystems ausgesetzt ist und Veränderungen des kostengünstigen Kalibriermediums, mit der nicht standardisierten Referenz, während des Betriebs bei der Kalibrierung berücksichtigt werden. Dies erlaubt eine langzeitstabile Kalibrierung des Sensorsystems. Zusätzlich werden bei dem erfindungsgemäßen Verfahren Abweichung des Kalibriermediums vom eigentlichen Meßort des Sensorsystems berücksichtigt, wodurch eine wesentlich präzisere Kalibrierung des Sensorsystems ermöglicht wird, die zudem den gesamten Erfassungsbereich des Sensorsystems umfaßt.

Weitere Ausführungsformen und Vorteile der Erfindung werden im Folgenden anhand der Figuren sowie deren Beschreibung erläutert.

Es zeigen
- Figur 1: eine prinzipielle Ausführungsform eines Sensorsystems mit Kalibriermedien, bei der Durchführung eines ersten Kalibrierungsschritts, und
- Figur 2: das Sensorsystem nach Figur 1, bei der Durchführung eines zweiten Kalibrierungsschritts bzw. in einem Kalibriermodus.

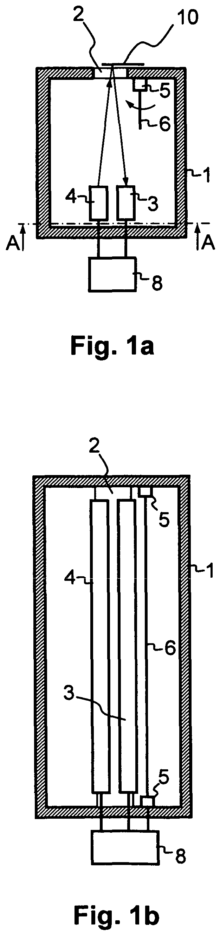

Figur 1 zeigt eine prinzipielle Ausführungsform eines Sensorsystems mit Kalibriermedien, bei der Durchführung eines ersten Kalibrierungsschritts. Figur 1a zeigt einen Schnitt senkrecht zur Längsachse des Sensorsystem, während Figur 1b einen Schnitt parallel zur Längsachse des Sensorsystems, in einer in Figur 1a angegebenen Blickrichtung A-A, darstellt.

Das Sensorsystem besteht aus einem Sensorgehäuse 1, in welchem mindestens ein Sensor 3 und eine Anregungsquelle 4 enthalten sind. Im dargestellten Beispiel handelt es sich bei dem Sensor 3 um eine Zeilenkamera, die von einer Anzahl nebeneinander angeordneter Detektoren gebildet wird, z. B. Fotodioden oder von einem CCD-Element. Ebenso können zwei oder mehr Zeilenkameras parallel nebeneinander angeordnet sein. Die Anregungsquelle 4 ist eine ebenfalls zeilenförmig aufgebaute Beleuchtung, die z. B. aus einer Anzahl nebeneinander angeordneter Elemente wie Leuchtdioden bestehen kann. Die Beleuchtung 4 kann beispielsweise weißes Licht aussenden, es ist aber auch möglich, daß Beleuchtung 4 Licht mit bestimmten spektralen Eigenschaften aussendet, z. B. infrarotes, rotes, grünes, blaues, ultraviolettes Licht usw. Im Sensorgehäuse 1 ist ein Fenster 2 vorgesehen, welches für das Licht der Beleuchtung 4 und das zum Sensor 3 zurückreflektierte Licht durchlässig ist. Das Sensorgehäuse 1 kann staubdicht ausgebildet sein, um eine Verschmutzung des Sensors 3 bzw. der Beleuchtung 4 zu verhindern. Der Sensor 3 sowie die Beleuchtung 4 stehen mit einer Steuereinrichtung 8 in Verbindung, welche den Sensor 3 sowie die Beleuchtung 4 steuert und die Signale des Sensors 3 auswertet. Die Steuereinrichtung 8 kann beispielsweise von einem Mikroprozessor oder einem digitalen Signalprozessor gebildet werden, der über einen flüchtigen Arbeitsspeicher sowie einen nichtflüchtigen Speicher, für die Speicherung von Software und für den Betrieb erforderliche Parameter, verfügen kann.

Während des in Figur 1a dargestellten ersten Kalibrierungsschritts wird ein erstes Kalibriermedium 10 in den Erfassungsbereich des Sensorsystems eingebracht. Dies kann beispielsweise durch eine Bedienperson geschehen, es ist aber auch möglich, daß das erste Kalibriermedium 10 von einem Transportsystem eingebracht wird, das z. B. Bestandteil einer Banknotenbearbeitungsmaschine ist, in welcher das Sensorsystem eingebaut und zur Überprüfung von Banknoten verwendet wird. Das erste Kalibriermedium 10 wird dabei so positioniert, daß es sich im Fokusbereich des Sensorsystems befindet, d. h. an einem Ort, an dem sich auch die zu untersuchenden Meßobjekte während eines Betriebsmodus befinden, z. B. Banknoten in der Banknotenbearbeitungsmaschine. Das erste Kalibriermedium 10 ist dabei derart dimensioniert, daß es den gesamten Erfassungsbereich des Sensorsystems abdeckt. Es weist also insbesondere eine Länge auf, welche einer Läge des Sensors 3, wie z. B. in Figur 1b dargestellt, oder der Länge seines optischen Erfassungsbereichs entspricht. Vorteilhafterweise wird das erste Kalibriermedium 10 so groß gestaltet, daß es das gesamte Fenster 2 abdeckt. Dadurch wird vermieden, daß die Kalibrierung mittels des ersten Kalibriermediums 10 von externen Störsignalen beeinflußt wird. Das erste Kalibriermedium 10 weist eine hochwertige, standardisierte Referenz auf, insbesondere eine standardisierte Weißreferenz. Beispielsweise kann für die standardisierte Weißreferenz Spectralon® verwendet werden.

Gesteuert durch die Steuereinrichtung 8, wird beim ersten Kalibrierungsschritt das erste Kalibriermedium 10 mit der Beleuchtung 4 beleuchtet und das vom ersten Kalibriermedium 10 reflektierte Licht wird vom Sensor 3 detektiert. Die Meßsignale des Sensors 3, beispielsweise für die Intensität des vom ersten Kalibriermedium 10 reflektierten Lichts, werden von der Steuereinrichtung 8 analysiert. Ausgehend von dem verwendeten ersten Kalibriermedium 10 mit der standardisierten Weißreferenz und ihren dadurch exakt definierten Eigenschaften, kann eine Einstellung des Sensorsystems erfolgen, wenn die vom Sensor 3 gemessenen Intensitäten nicht den aufgrund der bekannten Eigenschaften des verwendeten ersten Kalibriermediums 10 erwarteten Intensitäten entsprechen. Da sich das erste Kalibriermedium 10 über den gesamten Sensor 3 erstreckt, werden für alle Detektoren des Sensors 3 Meßsignale erzeugt, welche die Kalibrierung der jeweiligen Detektoren ermöglichen. Zur Einstellung des Sensorsystems können beispielsweise Korrekturfaktoren berechnet werden, welche vorhandene Abweichungen bei der Kalibrierung des Sensorsystems mit dem ersten Kalibriermedium 10 ausgleichen. Die Korrekturfaktoren werden im nichtflüchtigen Speicher der Steuereinheit 8 gespeichert und bei späteren Messungen für die Erzeugung der Meßsignale verwendet. Es kann auch vorgesehen sein, daß die Intensität der Beleuchtung 4 bzw. deren einzelner Elemente von der Steuereinrichtung 8 verändert wird, bis die bei der Messung vorhandenen Abweichungen ausgeglichen sind. Dabei werden die bestimmten Parameter für die Beleuchtung 4 ebenfalls im nichtflüchtigen Speicher der Steuereinrichtung 8 für spätere Messungen gespeichert. Ebenso ist es möglich, sowohl Korrekturfaktoren für die Meßsignale als auch veränderte Intensitäten der Beleuchtung 4 vorzusehen, um vorhandene Abweichungen ausgleichen zu können. Am Ende des ersten Kalibrierungsschritts können außerdem die Meßsignale des Sensors 4 bzw. der einzelnen Detektoren für spätere Vergleiche gespeichert werden.

Vorteilhafterweise ist es vorgesehen, daß der erste Kalibrierungsschritt nur einmalig, z. B. bei der Herstellung oder nach einer Reparatur des Sensorsystems durchgeführt wird, so daß nur für den ersten Kalibrierungsschritt ein Kalibriermedium mit einer standardisierten Weißreferenz vorhanden sein muß.

Unmittelbar nach dem ersten Kalibrierungsschritt wird ein zweiter Kalibrierungsschritt mit dem im ersten Kalibrierungsschritt eingestellten Sensorsystem durchgeführt. Dazu ist innerhalb des Sensorgehäuses 1 ein zweites Kalibriermedium 6 vorhanden, welches eine Referenz mit ebenfalls definierten Eigenschaften aufweist, beispielsweise einer Weißreferenz. Wie nachfolgend noch erklärt werden wird, kann aber auf die Verwendung einer standardisierten und damit teueren Referenz innerhalb des Sensorsystems als Bestandteil des zweiten Kalibriermediums 6 verzichtet werden.

Für den zweiten Kalibrierungsschritt wird, wie in Figur 1a durch einen Pfeil angedeutet, das zweite Kalibriermedium 6 in den Strahlengang des Sensors 3 eingebracht. Dies kann beispielsweise wie dargestellt durch drehen oder schwenken geschehen. Das zweite Kalibriermedium 6 kann jedoch auch auf andere Weise in den Strahlengang des Sensors 3 eingebracht werden, z. B. durch klappen, schieben usw.

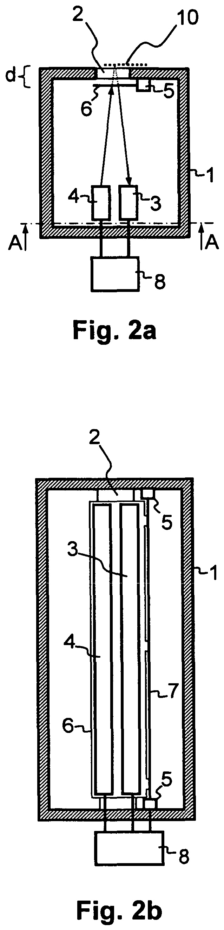

Wie aus den Figuren 1b und 2b ersichtlich, ist das zweite Kalibriermedium 6 an einer Achse 7 befestigt, die über einen Antrieb 5 verfügt, welcher von der Steuereinrichtung 8 gesteuert wird. Das zweite Kalibriermedium 6 wird, gesteuert von der Steuereinrichtung 8, mittels Antrieb 5 und Achse 7 in den Strahlengang eingebracht. Wie aus Figur 2a ersichtlich, wird das zweite Kalibriermedium 6 unmittelbar vor dem Fenster 2 innerhalb des Sensorgehäuses 1 positioniert. Auch das zweite Kalabriermedium 6 erstreckt sich über den gesamten Erfassungsbereich des Sensors 3 (Figur 2b), wodurch eine Kalibrierung aller Detektoren des Sensors 3 ermöglicht wird. Vorteilhafterweise wird das zweite Kalibriermedium 6 so groß gestaltet, daß es das gesamte Fenster 2 abdeckt. Dadurch wird vermieden, daß die Kalibrierung mittels des zweiten Kalibriermediums 6 von externen Störsignalen beeinflußt wird.

Das zweite Kalibriermedium 6 weist eine Weißreferenz mit Eigenschaften auf, die prinzipiell den Eigenschaften der standardisierten Weißreferenz des ersten Kalibriermediums 10 entsprechen. Die Weißreferenz des zweiten Kalibriermediums 6 ist jedoch im Gegensatz zur Weißreferenz des ersten Kalibriermediums 10 nicht standardisiert. Ebenso ist es möglich, daß das zweite Kalibriermedium 6 über eine Referenz mit Eigenschaften verfügt, welche den Eigenschaften der Referenz des ersten Kalibriermediums 10 zumindest ähnlich sind. Im Falle der für die Referenz des ersten Kalibriermediums 10 verwendeten Weißreferenz, kann beispielsweise für das zweite Kalibriermedium 6 eine Referenz verwendet werden, die weiß oder relativ hell ist. Idealerweise sollten die Eigenschaften der Referenz des zweiten Kalibriermediums 6 alterungsstabil sein. Als Referenz für das zweite Kalibriermedium 6 kann beispielsweise Banknotenpapier verwendet werden.

Im zweiten Kalibrierungsschritt erfolgt eine Beleuchtung des zweiten Kalibriermediums 6 bzw. dessen Weißreferenz durch die Beleuchtung 4. Falls, wie oben für den ersten Kalibrierungsschritt beschrieben, die Intensität der Beleuchtung 4 zur Einstellung verändert wurde, wird die Beleuchtung mit dieser veränderten Intensität betrieben. Das vom zweiten Kalibriermedium 6 reflektierte Licht wird vom Sensor 3 bzw. den einzelnen Detektoren erfaßt und in entsprechende Meßsignale umgesetzt, beispielsweise für die Intensität des vom zweiten Kalibriermedium 6 reflektierten Lichts. Wurden im oben beschriebenen ersten Kalibrierschritt Korrekturfaktoren bestimmt und gespeichert, werden diese bei der Erzeugung der Meßsignale von der Steuereinrichtung 8 verwendet. Die Meßsignale des Sensors 3 bzw. der einzelnen Detektoren für das zweite Kalibriermedium 6 werden von der Steuereinrichtung 8 in ihrem nichtflüchtigen Speicher am Ende des zweiten Kalibrierungsschritts gespeichert.

Die Meßsignale des zweiten Kalibrierungsschritts werden in aller Regel von den Meßsignalen des ersten Kalibrierungsschritts differieren, da in ihnen einerseits zum Ausdruck kommt, daß nicht das erste Kalibriermedium 10 mit der standardisierten Weißreferenz verwendet wird. Andererseits macht sich bemerkbar, daß das zweite Kalibriermedium 6 für die Messung nicht wie das in Figur 2a gestrichelt angedeutete erste Kalibriermedium 10 außerhalb des Sensorgehäuses 1 im Fokusbereich des Sensors 3 angeordnet ist, sondern um eine Distanz d in das Sensorgehäuse 1 hineinverschoben und damit um die Distanz d außerhalb des Fokusbereichs des Sensorsystems bzw. des Sensors 3 und/oder der Beleuchtung 4 liegt. Da der zweite Kalibrierungsschritt unmittelbar nach dem ersten Kalibrierungsschritt durchgeführt wird, stellen die Meßsignale des zweiten Kalibrierungsschritts eine Grundlage für spätere Kalibrierungen und Einstellungen des Sensorsystems bzw. des Sensors 3 und/oder der Beleuchtung 4 während des normalen Betriebs dar. Die an sich nachteiligen Abweichungen der nicht standardisierten Eigenschaften des zweiten Kalibriermediums 6 sowie die an sich nachteilige Verschiebung des zweiten Kalibriermediums 6 um die Distanz d aus dem Fokusbereich des Sensors 3 bzw. der Beleuchtung 4 heraus, werden somit automatisch einbezogen, weshalb sie auch bei späteren Kalibrierungen mit dem zweiten Kalibriermedium 6 bzw. dessen Referenz automatisch berücksichtigt werden und den Kalibriervorgang nicht nachteilig beeinflussen können. Zudem können dadurch auch z. B. alterungsbedingte Veränderungen des zweiten Kalibriermediums 6 spätre Kalibrierungsvorgänge nicht fehlerhaft beeinflussen, da diese immer geänderte Meßsignale hervorrufen, die bei der Kalibrierung ausgeglichen werden.

Für den Betriebsmodus wird das zweite Referenzmedium 6 unter Steuerung der Steuereinrichtung 8 vom Antrieb 5 aus dem Strahlengang des Sensors 3 bzw. der Beleuchtung 4 entfernt. Während des Betriebsmodus werden dann an dem für das erste Referenzmedium 10 in Figur 1a dargestellten Ort Meßobjekte, z. B. Banknoten, eingebracht. Dazu kann beispielsweise ein Transportsystem einer Banknotenbearbeitungsmaschine verwendet werden, in welcher das Sensorsystem zur Prüfung von Banknoten verwendet wird. Bei der Auswertung der Meßsignale des Sensors 3 durch die Steuereinrichtung 8 werden zur Prüfung der Banknoten im Betriebsmodus die oben beschriebenen Korrekturfaktoren und/oder die veränderte Intensität der Beleuchtung 4 verwendet.

Nach vorgegebenen Benutzungszeiträumen des Sensorsystems oder beim Einschalten des Sensorsystems bzw. der das Sensorsystem aufweisenden Banknotenbearbeitungsmaschine kann es vorgesehen sein, daß eine erneute Kalibrierung und Einstellung des Sensorsystems bzw. des Sensors 3 und/oder der Beleuchtung in einem Kalibriermodus durchgeführt wird. Dazu wird, wie beim oben beschriebnen zweiten Kalibrierungsschritt, das zweite Kalibriermedium 6 vom Antrieb 5 in den Strahlengang des Sensors 3 und/oder der Beleuchtung 4 eingebracht. Die bei der erneuten Kalibrierung ermittelten Meßsignale des Sensors 3 bzw. der einzelnen Detektoren werden mit den im nichtflüchtigen Speicher der Steuereinrichtung 8 gespeicherten Meßsignalen des zweiten Kalibrierungsschritts verglichen. Treten Abweichungen auf, wird das Sensorsystem, d. h. der Sensor 3 und/oder die Beleuchtung 4, in der oben für den ersten Kalibrierungsschritt beschriebenen Weise eingestellt. Dazu werden Korrekturfaktoren für die Korrektur der Abweichungen der Meßsignale ermittelt und/oder die Intensität der Beleuchtung 4 bzw. deren einzelner Elemente wird verändert. Die Korrekturfaktoren bzw. die Veränderung der Intensität der Beleuchtung 4 werden im nichtflüchtigen Speicher der Steuereinrichtung 8 gespeichert und nachfolgend im Betriebsmodus verwendet, für den das zweite Kalibriermedium 6 unter Steuerung der Steuereinrichtung 8 vom Antrieb 5 erneut aus dem Strahlengang des Sensors 3 entfernt wird.

Die bei der erneuten Kalibrierung festgestellten Abweichungen zwischen den bei der Kalibrierung ermittelten Meßsignalen und den im nichtflüchtigen Speicher der Steuereinrichtung 8 gespeicherten Meßsignalen des zweiten Kalibrierungsschritts erlauben zudem eine Aussage über bestimmte Drifterscheinungen des Sensorsystems, also alterungs-, verschmutzungs- usw. - bedingte Veränderungen von Sensor 3, Beleuchtung 4, zweitem Kalibermedium 6 usw.

In der oben beschriebenen Ausführungsform ist ein in Reflektion messender Sensor 3 mit zugehöriger Beleuchtung 4 dargestellt. Es ist aber offensichtlich, daß auch ein in Transmission messender Sensor, mit einer dem Sensor außerhalb des Sensorgehäuses 1 gegenüberliegenden Beleuchtung kalibriert werden kann. Dazu müssen die Kalibriermedien 6, 10 entsprechend gewählt sein, insbesondere müssen diese zumindest für einen Teil des Lichts der Beleuchtung 4 durchlässig sein. Es ist offensichtlich, daß neben den beschriebenen optischen Sensoren auch andere Sensoren mit dem vorgeschlagenen Verfahren kalibriert werden können, wenn Kalibriermedien 6, 10 mit entsprechenden sensorspezifischen Eigenschaften gewählt werden.

In der obigen Beschreibung wurde beispielhaft ausgeführt, daß die Einstellung des Sensorsystems aufgrund der bei der Kalibrierung festgestellten Abweichungen mittels Korrekturfaktoren und/oder einer Veränderung der Intensität der Anregungsquelle vorgenommen werden kann. Die Einstellung des Sensorsystems, d. h. die Korrektur der festgestellten Abweichungen, kann aber auch auf anderen Wegen erreicht werden. Beispielsweise kann die Verstärkung von Verstärkern verändert werden, mit welchen die vom Sensor bzw. den einzelnen Detektoren stammenden Meßsignale für die weitere Verarbeitung verstärkt werden.

## Patentansprüche

1. Verfahren für die Kalibrierung eines optischen Sensorsystems in einem Sensorgehäuse (1), mit einem Betriebsmodus, für die Prüfung von Meßobjekten, insbesondre Banknoten, und einem Kalibriermodus, für die Kalibrierung des Sensorsystems,
**gekennzeichnet durch**
einen ersten Kalibrierungsschritt, bei dem ein von dem Sensorsystem unabhängiges erstes Kalibriermedium (10), mit einer standardisierten Referenz, in einen außerhalb des Sensorgehäuses (1) liegenden Fokusbereich des Sensorsystems eingebracht wird und den gesamten Erfassungsbereich des Sensorsystems abdeckt, an dem sich während des Betriebsmodus das jeweils zu prüfende Meßobjekt befindet, wobei eine Lichtquelle (4) des Sensorsystems das erste Kalibriermedium (10) mit einem Anregungssignal anregt und ein aufgrund des Anregungssignals von der standardisierten Referenz des ersten Kalibriermediums (10) erzeugtes Signal von mindestens einem Sensor (3) des Sensorsystems detektiert und ein Meßsignal erzeugt wird, und wobei aufgrund des Meßsignals eine Einstellung des Sensorsystems vorgenommen wird, und einen zweiten Kalibrierungsschritt, der unmittelbar nach dem ersten Kalibrierungsschritt durchgeführt wird, wobei ein zweites Kalibriermedium (6), mit einer nicht standardisierten Referenz, das Bestandteil des Sensorsystems ist, an einen Ort in den Strahlengang des Sensorsystems eingebracht wird, der um eine Distanz (d) zum Fokusbereich des Sensorsystems in das Sensorgehäuse (1) hinein versetzt ist, und den gesamten Erfassungsbereich des Sensorsystems abdeckt, wobei die Lichtquelle (4) des Sensorsystems das zweite Kalibriermedium (6) mit dem Anregungssignal anregt und ein aufgrund des Anregungssignals von der Referenz des zweiten Kalibriermediums (6) erzeugtes Signal vom Sensor (3) detektiert und ein Meßsignal erzeugt wird, und
wobei das Meßsignal des zweiten Kalibrierungsschritts gespeichert wird, und weiterhin dadurch, daß im Kalibriermodus das zweite Kalibriermedium (6) erneut an den Ort in den Strahlengang des Sensorsystems eingebracht wird, der um die Distanz (d) zum Fokusbereich des Sensorsystems in das Sensorgehäuse hinein versetzt ist, und den gesamten Erfassungsbereich des Sensorsystems abdeckt, wobei die Lichtquelle (4) des Sensorsystems das zweite Kalibriermedium (6) mit dem Anregungssignal anregt und ein aufgrund des Anregungssignals von der Referenz des zweiten Kalibriermediums (6) erzeugtes Signal vom Sensor (3) detektiert und ein Meßsignal erzeugt wird, und wobei das Meßsignal des Kalibriermodus mit dem gespeicherten Meßsignal des zweiten Kalibrierungsschritts verglichen wird, und
eine Einstellung des Sensorsystems vorgenommen wird, falls das Meßsignal des Kalibriermodus von dem gespeicherten Meßsignal des zweiten Kalibrierungsschritts abweicht.

2. Verfahren nach Anspruch 1, wobei die Referenz des zweiten Kalibriermediums (6) und die Referenz des ersten Kalibriermediums (10) vergleichbare Eigenschaften aufweisen.

3. Verfahren nach Anspruch 1 oder 2, wobei die Kalibrierung und Einstellung des Sensorsystems für eine Vielzahl den Sensor (3) bildender Detektoren vorgenommen und für jeden Detektor ein Meßsignal erzeugt und gespeichert wird.

4. Verfahren nach einem der Ansprüche 1 bis 3, wobei zur Einstellung des Sensorsystems Korrekturfaktoren bestimmt werden, mit denen die Meßsignale des Sensors (3) korrigiert werden.

## Claims

1. A method for the calibration of an optical sensor system in a sensor housing (1), having an operating mode, for the testing of measuring objects, in particular bank notes, and a calibration mode, for the calibration of the sensor system,
**characterized by**
a first calibration step, in which a first calibration medium (10) independent of the sensor system, having a standardized reference, is brought into a focus area, lying outside the sensor housing (1), of the sensor system and covers the entire detection area of the sensor system, where the particular measuring object to be tested is located during the operating mode, wherein a light source (4) of the sensor system excites the first calibration medium (10) with an excitation signal, and a signal generated by the standardized reference of the first calibration medium (10) due to the excitation signal is detected by at least one sensor (3) of the sensor system and a measuring signal is generated, and wherein an adjustment of the sensor system is effected due to the measuring signal, and
a second calibration step which is performed immediately after the first calibration step, wherein a second calibration medium (6), having a non-standardized reference, and being a component of the sensor system, is brought into the optical path of the sensor system at a place which is shifted into the sensor housing (1) by a distance (d) in relation to the focus area of the sensor system, and covers the entire detection area of the sensor system, wherein the light source (4) of the sensor system excites the second calibration medium (6) with the excitation signal, and a signal generated by the reference of the second calibration medium (6) due to the excitation signal is detected by the sensor (3) and a measuring signal is generated, and
wherein the measuring signal of the second calibration step is stored, and further in that in the calibration mode the second calibration medium (6) is again brought into the optical path of the sensor system at the place which is shifted into the sensor housing by the distance (d) in relation to the focus area of the sensor system, and covers the entire detection area of the sensor system, wherein the light source (4) of the sensor system excites the second calibration medium (6) with the excitation signal, and a signal generated by the reference of the second calibration medium (6) due to the excitation signal is detected by the sensor (3) and a measuring signal is generated, and wherein the measuring signal of the calibration mode is compared with the stored measuring signal of the second calibration step, and
an adjustment of the sensor system is effected if the measuring signal of the calibration mode deviates from the stored measuring signal of the second calibration step.

2. The method according to claim 1, wherein the reference of the second calibration medium (6) and the reference of the first calibration medium (10) have comparable properties.

3. The method according to claim 1 or 2, wherein the calibration and adjustment of the sensor system are effected for a multiplicity of detectors forming the sensor (3) and for each detector a measuring signal is generated and stored.

4. The method according to any of claims 1 to 3, wherein for adjusting the sensor system correction factors are determined, with which the measuring signals of the sensor (3) are corrected.

## Revendications

1. Procédé destiné à l'étalonnage d'un système de capteur optique dans un boîtier de capteur (1), comprenant un mode de fonctionnement pour la vérification d'objets à mesurer, en particulier de billets de banque, et un mode d'étalonnage pour l'étalonnage du système de capteur,
**caractérisé par**
une première étape d'étalonnage lors de laquelle un premier moyen d'étalonnage (10) indépendant du système de capteur, ayant une référence standardisée, est introduit dans une zone de focalisation du système de capteur située à l'extérieur du boîtier de capteur (1) et couvre la totalité de la zone de saisie du système de capteur à laquelle se trouve, durant le mode de fonctionnement, l'objet à respectivement mesurer, cependant qu'une source lumineuse (4) du système de capteur excite le premier moyen d'étalonnage (10) avec un signal d'excitation et qu'un signal, généré en raison du signal d'excitation par la référence standardisée du premier moyen d'étalonnage (10), est détecté par au moins un capteur (3) du système de capteur et qu'un signal de mesure est généré, et cependant que, en raison du signal de mesure, un réglage du système de capteur est effectué, et
une deuxième étape d'étalonnage exécutée juste après la première étape d'étalonnage, cependant qu'un deuxième moyen d'étalonnage (6), ayant une référence non standardisée, qui est une partie constituante du système de capteur, est introduit à un endroit dans le couloir de rayonnement du système de capteur qui est décalé d'une distance (d), par rapport à la zone de focalisation du système de capteur, dedans le boîtier de capteur (1), et couvre la totalité de la zone de saisie du système de capteur, cependant que la source lumineuse (4) du système de capteur excite le deuxième moyen d'étalonnage (6) avec le signal d'excitation et qu'un signal généré, en raison du signal d'excitation, par la référence du deuxième moyen d'étalonnage (6) est détecté par le capteur (3) et qu'un signal de mesure est généré, et cependant que le signal de mesure de la deuxième étape d'étalonnage est mémorisé, et par ailleurs en ce que, dans le mode d'étalonnage, le deuxième moyen d'étalonnage (6) est à nouveau introduit à l'endroit dans le couloir de rayonnement du système de capteur qui est décalé d'une distance (d), par rapport à la zone de focalisation du système de capteur, dedans le boîtier de capteur, et couvre la totalité de la zone de saisie du système de capteur, cependant que la source lumineuse (4) du système de capteur excite le deuxième moyen d'étalonnage (6) avec le signal d'excitation et qu'un signal généré, en raison du signal d'excitation, par la référence du deuxième moyen d'étalonnage (6) est détecté par le capteur (3) et qu'un signal de mesure est généré, et cependant que le signal de mesure du mode d'étalonnage est comparé avec le signal de mesure mémorisé de la deuxième étape d'étalonnage, et
un réglage du système de capteur est effectué dans le cas où le signal de mesure du mode d'étalonnage diverge du signal de mesure mémorisé de la deuxième étape d'étalonnage.

2. Procédé selon la revendication 1, cependant que la référence du deuxième moyen d'étalonnage (6) et la référence du premier moyen d'étalonnage (10) présentent des propriétés comparables.

3. Procédé selon la revendication 1 ou 2, cependant que l'étalonnage et le réglage du système de capteur est effectué pour une pluralité de détecteurs constituant le capteur (3), et que, pour chaque détecteur, une signal de mesure est généré et mémorisé.

4. Procédé selon une des revendications de 1 à 3, cependant que, pour le réglage du système de capteur, des facteurs de correction sont déterminés, avec lesquels les signaux de mesure du capteur (3) sont corrigés.
